# EUROPÄISCHE PATENTANMELDUNG

(11) **EP 1 510 392 A2**
(43) Veröffentlichungstag der Anmeldung: **02.03.2005**
(21) Anmeldenummer: 04103478.6
(22) Anmeldetag: 21.07.2004
(51) Int. Cl.: B60K 15/03

(54) **Kraftstoffbehälter für ein Kraftfahrzeug und Kraftstoff-Fördereinheit**

(30) Priorität: 29.08.2003 DE 10340246
(71) Anmelder: SIEMENS AKTIENGESELLSCHAFT, 80333 München (DE)
(72) Erfinder: Fühling, Stefan, 44269 Dortmund (DE); Hagist, Dieter, 56112 Lahnstein (DE); Kreuz, Alois, 58708 Menden (DE); Lenz, Frank, 36251 Bad Hersfeld (DE)

(57) **Zusammenfassung**

Eine in einem Kraftstoffbehälter (1) angeordnete Kraftstoff-Fördereinheit (14) hat ein sich über den gesamten Bereich eines Bodens (7) erstreckendes, beutelförmiges Filtergewebe (16). Das Material und die Maschenweite des Filtergewebes (16) sind derart bemessen, dass bei benetztem Filtergewebe (16) Kraftstoff durchgelassen und ein Eindringen von Luft verhindert wird. Die Kraftstoff-Fördereinheit (14) benötigt keine Saugstrahlpumpen zur Versorgung einer Kraftstoffpumpe (18) mit Kraftstoff aus verschiedenen Bereichen des Kraftstoffbehälters (1).

## Beschreibung

Die Erfindung betrifft einen Kraftstoffbehälter für ein Kraftfahrzeug mit einer Kraftstoff-Fördereinheit zum Fördern von Kraftstoff, mit einer Kraftstoffpumpe und mit einem am Boden des Kraftstoffbehälters angeordneten Filterelement, wobei das Filterelement ein beutelförmiges Filtergewebe mit vorgesehener Maschenweite aufweist. Weiterhin betrifft die Erfindung eine Kraftstoff-Fördereinheit zum Fördern von Kraftstoff aus einem Kraftstoffbehälter eines Kraftfahrzeuges, mit einer Kraftstoffpumpe und mit einem am Boden des Kraftstoffbehälters anzuordnenden Filterelement, wobei das Filterelement ein beutelförmiges Filtergewebe mit vorgesehener Maschenweite aufweist.

Kraftstoffbehälter mit Kraftstoff-Fördereinheiten für heutige Kraftfahrzeuge weisen meist eine in einem Schwalltopf angeordnete Kraftstoffpumpe auf. Der Schwalltopf hat ein Bodenventil, über das Kraftstoff einströmen kann. Die Kraftstoffpumpe fördert Kraftstoff aus dem Schwalltopf zu einer Brennkraftmaschine und zu mehreren im Kraftstoffbehälter verteilt angeordneten Saugstrahlpumpen. Die Saugstrahlpumpen sind bei dem in der Regel welligen Boden des Kraftstoffbehälters an verschiedenen tiefen Stellen angeordnet. Weiterhin sind die Saugstrahlpumpen häufig an den äußeren Begrenzungen des Bodens angeordnet, um beispielsweise bei Kurvenfahrt sich in einer Seite des Kraftstoffbehälters sammelnden Kraftstoff in den Schwalltopf zu fördern. Das Filterelement befindet sich in der Saugseite der Kraftstoffpumpe und zumeist auch am Bodenventil oder an der Saugseite einer den Schwalltopf befüllenden Saugstrahlpumpe. Damit der Schwalltopf auch bei nahezu leerem Kraftstoffbehälter mit Kraftstoff befüllt werden kann, müssen der Schwalltopf und die Saugstrahlpumpen jeweils gegen den Boden des Kraftstoffbehälters vorgespannt werden.

Nachteilig bei dem bekannten Kraftstoffbehälter und der Kraftstoff-Fördereinheit ist, dass die Saugstrahlpumpen Pumpleistung und Kraftstoff benötigen. Hierdurch sind die Kraftstoffpumpe und der Schwalltopf stärker zu dimensionieren, als es für den Betrieb der Brennkraftmaschine erforderlich wäre. Der Kraftstoffbehälter mit der Kraftstoff-Fördereinheit ist daher besonders kostenintensiv zu fertigen.

Der Erfindung liegt das Problem zugrunde, einen Kraftstoffbehälter der eingangs genannten Art so zu gestalten, dass der Einsatz von Saugstrahlpumpen zur Versorgung der Kraftstoffpumpe weitgehend vermieden wird. Weiterhin soll eine Kraftstoff-Fördereinheit geschaffen werden, welche keine Saugstrahlpumpen und Schwalltopf zu ihrer Versorgung mit Kraftstoff benötigt.

Das erstgenannte Problem wird erfindungsgemäß dadurch gelöst, dass das beutelförmige Filtergewebe in mehreren, in der vorgesehenen Einbaulage des Kraftstoffbehälters tief gelegenen Bereichen des Bodens angeordnet ist, wobei die Maschenweite derart bemessen ist, dass benetztes Filtergewebe durchlässig für Kraftstoff und undurchlässig für Luft ist.

Durch diese Gestaltung sammelt sich bei nahezu leerem Kraftstoffbehälter der Kraftstoff in dem Filterelement. Wenn ein Teil des Filterelementes aus dem Kraftstoff herausragt, verhindert das Filtergewebe das Eindringen von Luft. Daher wird die Kraftstoffpumpe mit Kraftstoff versorgt, solange zumindest ein Teil des Filtergewebes in Kraftstoff eintaucht. Daher erfordert der erfindungsgemäße Kraftstoffbehälter keine Saugstrahlpumpen zur Versorgung der Kraftstoffpumpe mit Kraftstoff. Das Filterelement kann unmittelbar mit der Kraftstoffpumpe verbunden werden. Das Filtergewebe lässt sich daher an denjenigen Stellen im Kraftstoffbehälter anordnen, an denen der bekannte Kraftstoffbehälter Saugstrahlpumpen hat.

Das Filterelement weist gemäß einer vorteilhaften Weiterbildung der Erfindung ein besonders großes Volumen zur Sammlung des Kraftstoffs auf, wenn sich das Filtergewebe im Wesentlichen über den gesamten Bereich des Bodens erstreckt. Hierbei ist es nicht erforderlich, dass das Filtergewebe den gesamten Bereich des Bodens komplett abdeckt. Es genügt meist, wenn das Filtergewebe sich über die am tiefsten gelegenen Bereiche des Kraftstoffbehälters erstreckt.

Das Filterelement gestaltet sich gemäß einer anderen vorteilhaften Weiterbildung der Erfindung besonders kostengünstig, wenn mehrere einzelne Filtergewebe im Bereich des Bodens verteilt angeordnet sind.

Ein Vordringen von Luft zu der Kraftstoffpumpe bei mehreren einzelnen Filtergeweben lässt sich gemäß einer anderen vorteilhaften Weiterbildung der Erfindung einfach vermeiden, wenn ein die mehreren Filtergewebe verbindendes Sammelstück nahe eines tiefsten Punktes des Bodens angeordnet ist.

Die Befestigung des Filterelementes in dem erfindungsgemäßen Kraftstoffbehälter erfordert einen besonders geringen Aufwand, wenn der Boden Rastmittel zur Halterung des Filterelementes hat.

Die Kraftstoffpumpe könnte wie bei den bekannten Kraftstoffbehältern gegen den Boden vorgespannt sein. Da jedoch das Filterelement oder die Filterelemente jederzeit eine zuverlässige Verbindung der Kraftstoffpumpe mit Kraftstoff sicherstellen, lässt sich eine solche Bodenabstützung häufig vermeiden. Daher lässt sich der erfindungsgemäße Kraftstoffbehälter besonders kostengünstig fertigen, wenn die Kraftstoffpumpe unmittelbar an einem eine Montageöffnung verschließenden Flansch befestigt ist.

Die Vorspannung der Filtergewebe in die vorgesehenen Bereiche des Bodens des Kraftstoffbehälters erfordert gemäß einer anderen vorteilhaften Weiterbildung der Erfindung einen besonders geringen baulichen Aufwand, wenn mehrere Filtergewebe über Federelemente miteinander verbunden sind und in einem zusammengefalteten Zustand der Montageöffnung im Kraftstoffbehälter entsprechende Abmessungen aufweisen und im auseinandergefalteten Zustand von den Federelementen gegen den Boden vorgespannt sind.

Das großflächige Filtergewebe lässt sich gemäß einer anderen vorteilhaften Weiterbildung der Erfindung einfach in dem erfindungsgemäßen Kraftstoffbehälter montieren, wenn ein einzelnes Filtergewebe mehrere Federelemente hat und in einem zusammengefalteten Zustand der Montageöffnung im Kraftstoffbehälter entsprechende Abmessungen aufweist und im auseinandergefalteten Zustand von den Federelementen gegen den Boden vorgespannt ist.

Die Abstützung der Federelemente gestaltet sich gemäß einer anderen vorteilhaften Weiterbildung der Erfindung konstruktiv besonders einfach, wenn die dem Filtergewebe abgewandten Enden der Federelemente gegen eine obere Wandung des Kraftstoffbehälters vorgespannt sind.

Zur weiteren Vereinfachung der Montage der Kraftstoff-Fördereinheit in dem Kraftstoffbehälter trägt es bei, wenn die freien Enden der Federelemente bis zu dem Flansch geführt sind. Durch diese Gestaltung muss nach der Einführung des einen Filterelementes oder der Filterelemente durch die Montageöffnung bei der Montage nur noch darauf geachtet werden, dass der Flansch mit der vorgesehenen Ausrichtung in der Montageöffnung eingesetzt ist.

Das zweitgenannte Problem, nämlich die Schaffung einer Kraftstoff-Fördereinheit, welche keine Saugstrahlpumpen zu ihrer Versorgung mit Kraftstoff benötigt, wird erfindungsgemäß dadurch gelöst, dass das beutelförmige Filtergewebe im Wesentlichen dem Boden des Kraftstoffbehälters entsprechende Abmessungen aufweist oder dass das Filterelement mehrere, beutelförmige Filtergewebe hat, wobei die Maschenweite und das Material des Filtergewebes derart bemessen ist, dass benetztes Filtergewebe durchlässig für Kraftstoff und undurchlässig für Luft ist.

Durch diese Gestaltung lässt sich das Filtergewebe an den vorgesehenen Stellen an dem Boden des Kraftstoffbehälters anordnen und mit der Kraftstoffpumpe verbinden. Das Filtergewebe kann dabei zur Erstreckung über den gesamten Bodenbereich des Kraftstoffbehälters entsprechende Abmessungen aufweisen. Alternativ dazu können mehrere Filtergewebe zur verteilten Anordnung in dem Kraftstoffbehälter vorgesehen sein. Da das mit Kraftstoff benetzte Filtergewebe für Kraftstoff durchlässig und für Luft undurchlässig ist, vermag die Kraftstoffpumpe solange Kraftstoff anzusaugen, wie sich Kraftstoff im Kraftstoffbehälter befindet. Saugstrahlpumpen zur Versorgung der Kraftstoffpumpe mit Kraftstoff sind dank der Erfindung nicht erforderlich.

Bei mehreren, verteilt im Kraftstoffbehälter anzuordnenden Filtergeweben lässt sich gemäß einer anderen vorteilhaften Weiterbildung der Erfindung ein Vordringen von Luft zu der Kraftstoffpumpe einfach vermeiden, wenn eine zwischen der Kraftstoffpumpe und dem Filterelement angeordnete Leitung einen den Leitungsquerschnitt abdeckendes Filtergewebe mit der vorgesehenen Maschenweite aufweist. Dieses in der Leitung angeordnete Filtergewebe bildet eine weitere Sicherheit gegen ein Eindringen von Luft, beispielsweise bei beschädigten, gegen den Boden vorzuspannenden Filtergewebe.

Die Erfindung lässt zahlreiche Ausführungsformen zu. Zur weiteren Verdeutlichung ihres Grundprinzips sind zwei davon in der Zeichnung dargestellt und werden nachfolgend beschrieben. Diese zeigt in
- Figur 1: einen erfindungsgemäßen Kraftstoffbehälter mit einer Fördereinheit im Längsschnitt,
- Figur 2: stark vergrößert eine im Kraftstoffbehälter aus Figur 1 angeordnete Kraftstoffleitung im Längsschnitt,
- Figur 3: eine weitere Ausführungsform des erfindungsgemäßen Kraftstoffbehälters im Längsschnitt.

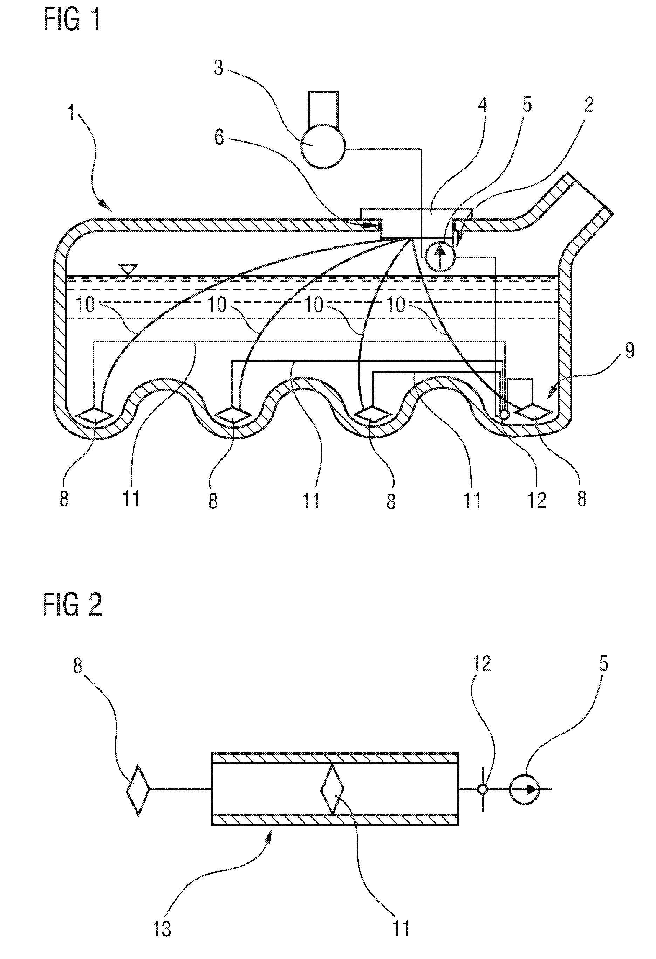

Figur 1 zeigt eine Schnittdarstellung durch einen Kraftstoffbehälter 1 mit einer darin angeordneten Kraftstoff-Fördereinheit 2 zur Förderung von Kraftstoff zu einer Brennkraftmaschine 3. Die Kraftstoff-Fördereinheit 2 hat eine an einem Flansch 4 befestigte Kraftstoffpumpe 5. Der Flansch 4 verschließt eine Montageöffnung 6 des Kraftstoffbehälters 1. Der Kraftstoffbehälter 1 weist einen welligen Boden 7 auf, gegen dessen tiefste Stellen jeweils ein beutelförmiges Filtergewebe 8 eines Filterelements 9 vorgespannt ist. Die Vorspannung erfolgt über an den Filtergeweben 8 befestigten und an dem Flansch 4 abstützenden Federelemente 10. Die Filtergewebe 8 sind jeweils beutelförmig gestaltet und über eine Kraftstoffleitung 11 mit einem Sammelstück 12 verbunden. Das Sammelstück 12 kann wahlweise als Anschlussstück mit mehreren Anschlüssen für die Kraftstoffleitungen 11 ausgebildet sein. Die Saugseite der Kraftstoffpumpe 5 ist ebenfalls mit dem Sammelstück 12 verbunden. Das Filtergewebe 8 ist hinsichtlich seines Materials und seiner Maschenweite derart bemessen, dass es im benetzten Zustand ausschließlich Kraftstoff durchlässt und für Luft undurchlässig ist. Daher vermag die Kraftstoffpumpe 5 Kraftstoff über das Sammelstück 12 ansaugen, solange ein einzelnes Filtergewebe 8 mit Kraftstoff bedeckt ist. Das Sammelstück 12 ist an einer beliebigen Stelle des Kraftstoffbehälters 1 angeordnet.

Figur 2 zeigt schematisch einen Längsschnitt durch eine der von den Filtergeweben 8 zu dem Sammelstück 12 führenden Kraftstoffleitung 11 aus Figur 1. In der Kraftstoffleitung 11 ist ein dessen Querschnitt vollständig überdeckendes Filtergewebe 13 angeordnet. Dieses Filtergewebes 13 dient als zusätzliche Sicherheit gegen ein Vordringen von Luft zu der Kraftstoffpumpe 5. Die Benetzung des Filtergewebes 13 kann zur zuverlässigen Sperrung gegen ein Eindringen von Luft von der Seite des Sammelstücks 12 erfolgen.

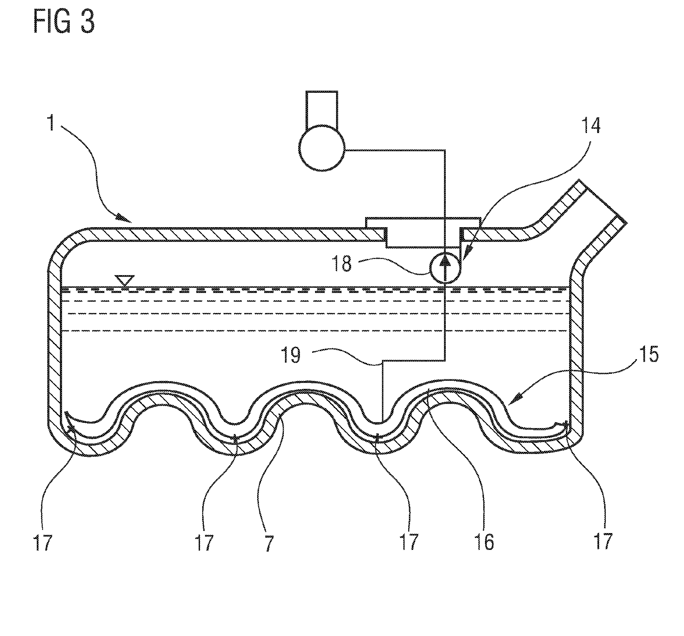

Figur 3 zeigt eine weitere Ausführungsform des erfindungsgemäßen Kraftstoffbehälters 1, bei dem eine Kraftstoff-Fördereinheit 14 ein Filterelement 15 mit einem sich über nahezu dem gesamten Boden erstreckendes, beutelförmiges Filtergewebe 16 aufweist. Der Boden 7 des Kraftstoffbehälters 1 weist mehrere Rastelemente 17 zur Halterung des Filterelementes 15 auf. Eine Kraftstoffpumpe 18 der Kraftstoff-Fördereinheit 14 ist über eine Kraftstoffleitung 19 mit dem beutelförmigen Filtergewebe 16 verbunden. Das Filtergewebe 16 ist wie zu der Ausführungsform nach den Figuren 1 und 2 beschrieben aufgebaut und sammelt den Kraftstoff, solange zumindest ein Teilbereich des Filtergewebes 16 mit Kraftstoff bedeckt ist. Selbstverständlich kann die Kraftstoffpumpe 18 auch über mehrere Kraftstoffleitungen 19 mit dem beutelförmigen Filtergewebe 16 verbunden sein, wobei die Kraftstoffleitungen 19 jeweils in die tiefgelegenen Bereiche des Bodens 7 geführt sind.

## Patentansprüche

1. Kraftstoffbehälter für ein Kraftfahrzeug mit einer Kraftstoff-Fördereinheit zum Fördern von Kraftstoff, mit einer Kraftstoffpumpe und mit einem am Boden des Kraftstoffbehälters angeordneten Filterelement, wobei das Filterelement ein beutelförmiges Filtergewebe mit vorgesehener Maschenweite aufweist, **dadurch gekennzeichnet, dass** das beutelförmige Filtergewebe (8, 16) in mehreren, in der vorgesehenen Einbaulage des Kraftstoffbehälters (1) tief gelegenen Bereichen des Bodens (7) angeordnet ist, wobei die Maschenweite derart bemessen ist, dass benetztes Filtergewebe (13, 16) durchlässig für Kraftstoff und undurchlässig für Luft ist.

2. Kraftstoffbehälter nach Anspruch 1, **dadurch gekennzeichnet, dass** sich das Filtergewebe (16) im Wesentlichen über den gesamten Bereich des Bodens (7) erstreckt

3. Kraftstoffbehälter nach Anspruch 1 oder 2, **dadurch gekennzeichnet , dass** mehrere einzelne Filtergewebe (8) in den vorgesehenen Bereichen des Bodens (7) verteilt angeordnet sind.

4. Kraftstoffbehälter nach zumindest einem der vorhergehenden Ansprüche, **dadurch gekennzeichnet, dass** ein die mehreren Filtergewebe (8) verbindendes Sammelstück (12) nahe eines tiefsten Punktes des Bodens (7) angeordnet ist.

5. Kraftstoffbehälter nach zumindest einem der vorhergehenden Ansprüche, **dadurch gekennzeichnet, dass** der Boden (7) Rastmittel zur Halterung des Filterelementes (16) hat.

6. Kraftstoffbehälter nach zumindest einem der vorhergehenden Ansprüche, **dadurch gekennzeichnet, dass** die Kraftstoffpumpe (5) unmittelbar an einem eine Montageöffnung (6) verschließenden Flansch (4) befestigt ist.

7. Kraftstoffbehälter nach zumindest einem der vorhergehenden Ansprüche, **dadurch gekennzeichnet, dass** mehrere Filtergewebe (8) über Federelemente (10) miteinander verbunden sind und in einem zusammengefalteten Zustand der Montageöffnung (6) im Kraftstoffbehälter (1) entsprechende Abmessungen aufweisen und im auseinandergefalteten Zustand von den Federelementen (10) gegen den Boden (7) vorgespannt sind.

8. Kraftstoffbehälter nach zumindest einem der vorhergehenden Ansprüche, **dadurch gekennzeichnet, dass** ein einzelnes Filtergewebe (16) mehrere Federelemente hat und in einem zusammengefalteten Zustand der Montageöffnung im Kraftstoffbehälter (1) entsprechende Abmessungen aufweist und im auseinandergefalteten Zustand von den Federelementen gegen den Boden (7) vorgespannt ist.

9. Kraftstoffbehälter nach zumindest einem der vorhergehenden Ansprüche, **dadurch gekennzeichnet, dass** die dem Filtergewebe (8) abgewandten Enden der Federelemente (10) gegen eine obere Wandung des Kraftstoffbehälters (1) vorgespannt sind.

10. Kraftstoffbehälter nach zumindest einem der vorhergehenden Ansprüche, **dadurch gekennzeichnet, dass** die freien Enden der Federelemente (10) bis zu dem Flansch (4) geführt sind.

11. Kraftstoff-Fördereinheit zum Fördern von Kraftstoff aus einem Kraftstoffbehälter eines Kraftfahrzeuges, mit einer Kraftstoffpumpe und mit einem am Boden des Kraftstoffbehälters anzuordnenden Filterelement, wobei das Filterelement ein beutelförmiges Filtergewebe mit vorgesehener Maschenweite aufweist, **dadurch gekennzeichnet, dass** das beutelförmige Filtergewebe (16) im Wesentlichen dem Boden des Kraftstoffbehälters entsprechende Abmessungen aufweist oder dass das Filterelement mehrere beutelförmige Filtergewebe (8) hat, wobei die Maschenweite und das Material des Filtergewebes (8, 16) derart bemessen ist, dass benetztes Filtergewebe (8, 16) durchlässig für Kraftstoff und undurchlässig für Luft ist.

12. Kraftstoff-Fördereinheit nach Anspruch 11, **dadurch gekennzeichnet, dass** eine zwischen der Kraftstoffpumpe (5) und dem Filterelement (9) angeordnete Kraftstoffleitung (11) einen den Leitungsquerschnitt abdeckendes Filtergewebe (13) mit der vorgesehenen Maschenweite aufweist.
